# EUROPÄISCHE PATENTSCHRIFT

(11) **EP 3 303 462 B1**
(45) Veröffentlichungstag und Bekanntmachung des Hinweises auf die Patenterteilung: **26.06.2019**
(21) Anmeldenummer: 16728851.3
(22) Anmeldetag: 25.05.2016
(51) Int. Cl.: C08K 3/34, C08L 95/00

(54) **ASPHALTZUSAMMENSETZUNG SOWIE VERFAHREN ZUR HERSTELLUNG UND/ODER ERNEUERUNG VON WENIGSTENS EINER ASPHALTDECKSCHICHT**
ASPHALT COMPOSITION AND METHOD FOR PRODUCING AND/OR RENOVATING AT LEAST ONE ASPHALT SURFACE LAYER
COMPOSITION D'ASPHALTE ET PROCÉDÉ DE FABRICATION ET/OU DE RÉFECTION D'AU MOINS UNE COUCHE DE REVÊTEMENT D'ASPHALTE

(30) Priorität: 03.06.2015 DE 102015108862
(43) Veröffentlichungstag der Anmeldung: 11.04.2018
(73) Patentinhaber: Benoit, Harald Heinz Peter, 66482 Zweibrücken (DE)
(72) Erfinder: Benoit, Harald Heinz Peter, 66482 Zweibrücken (DE)
(74) Vertreter: Patentanwälte Dr. Keller, Schwertfeger Partnerschaft mbB
(86) Internationale Anmeldenummer: PCT/EP2016/061752
(87) Internationale Veröffentlichungsnummer: WO 2016/193082

(56) Entgegenhaltungen:
- CN-A- 101 235 208
- CN-A- 101 736 671
- CN-A- 101 906 745
- CN-A- 103 435 293

## Beschreibung

### Technisches Gebiet:

Die vorliegende Erfindung betrifft eine Asphaltzusammensetzung sowie ein Verfahren zur Herstellung und/oder Erneuerung von wenigstens einer Asphaltdeckschicht.

### Stand der Technik:

Die Herstellung von Asphalt aus einem Gemisch verschiedener Gesteinskörnungen wie Gesteine, Splitter, Sande und einem Bindemittel wie Bitumen ist bekannt. Hierzu wird das Asphaltmaterial bei hohen Temperaturen erhitzt und beispielsweise direkt beim Straßenbau oder an der Reparaturstelle verarbeitet. Bei der Reparatur beschädigter Asphaltabdeckungen, beispielsweise von Ausbrüchen an Straßen wird das Asphaltmaterial direkt mit einem Gas- oder Induktionsheizgerät erhitzt, um das Material viskos zu halten und somit dessen Verarbeitung zu erleichtern. Ferner sind Verfahren bekannt, bei denen das Asphaltmaterial mit Hilfe von Mikrowellen erhitzt wird, beispielsweise beschrieben in dem US-Patent 4,594,022 oder den US-Patenten US 4,319,856, 4,175,885, 4,252,459 und 4,252,487. Bei diesen Verfahren wird eine Folie eingesetzt, welche die eintreffenden Mikrowellen reflektieren soll, um so das Erhitzen des Materials zu erleichtern. Nachteilig bei diesen Verfahren ist jedoch, dass die Eindringtiefe der Mikrowellen in das Material nur gering ist. Aus den US 5,441,360 A, US 5,092,706 A, US 4,849,020 A ist bekannt, dass ein Mikrowellenstrahlung absorbierendes Material während des Recyclings einer Asphaltdeckschicht zum Einsatz gebracht wird. Ferner zeigen die darin beschriebenen Verfahren, wie eine Auskleidung von Schlaglöchern in Asphaltdeckschichten mit einem Mikrowellenstrahlung absorbierenden Material und eine spätere Erhitzung des zu reparierenden Schlaglochs mittels Mikrowellenstrahlung auszuführen ist.

Ähnliche Verfahren und Zusammensetzungen sind auch in den CN 101736671 A und CN 101906745 A beschrieben, deren Asphaltgemische zusätzlich noch eine Reihe weiterer Komponenten enthalten, u. a. Magnetpulver, Eisenpulver, Basalt und Siliciumcarbid. So beschreibt die CN 101736671 A eine Zusammensetzung einer Asphaltmischung für Deckschichten, welche durch Mikrowellenstrahlung (0,9 bis 6 GHz) erhitzbar ist und die zwischen 4 und 40 Gew.-% sandförmiges Siliciumcarbid enthält. Siliciumcarbid hat die Eigenschaft, Mikrowellen zu absorbieren und an die Umgebung in Form von Wärmeenergie abzugeben.

Die CN 101906745 A offenbart eine Asphaltmischung für Deckschichten, welche durch Mikrowellenstrahlung erhitzbar ist und ein mineralisches Pulver enthält, wobei das mineralische Pulver 10 bis 100 Gew.-% eines Mikrowellen absorbierenden Materials enthält und das Mikrowellen absorbierende Material Siliciumcarbid sein kann.

Die CN 101235208 A offenbart eine Zusammensetzung von Asphalt auf der Basis eines Bindemittels, vorzugsweise Bitumen, welches bei der Weiterverarbeitung durch Mikrowellenstrahlung erhitzt wird und welches 1,4 bis 2,1 % Siliciumcarbid in Form von nadelförmigen Kristallen enthält. Dabei können bituminöse Massen als Ausgangsmaterial zu Herstellung von Straßen eingesetzt werden.

Nachteilig bei den bisher bekannten Asphaltmischungen sowie den eingesetzten Verfahren zu deren Verarbeitung ist, dass es beim Auftragen der Asphaltgemische bzw. beim Auffüllen von Ausbrüchen einer fahrbaren Deckschicht zwangsläufig dazu kommt, dass auch Luft in die Asphaltgemische eingeschlossen wird. Aufgrund der heterogenen Korngrößenverteilung innerhalb des Asphaltgemisches entstehen Hohlräume, die eine über Siliciumcarbid vermittelte Wärmeübertragung verhindern oder zumindest erschweren.

### Darstellung der Erfindung:

Es ist daher Aufgabe der vorliegenden Erfindung, ein Asphaltgemisch und ein Verfahren bereitzustellen, bei dem die Wärmeübertragung bei einer Mikrowellenanwendung auf das Bindemittel in der Asphaltmischung optimiert ist und das somit die aus dem Stand der Technik bekannten Nachteile wenigstens teilweise ausräumt.

Erfindungsgemäß wird diese Aufgabe durch eine Asphaltzusammensetzung nach Anspruch 1 und ein Verfahren zur Herstellung und/oder Erneuerung von wenigstens einer Asphaltdeckschicht nach Anspruch 6 gelöst.

### Wege zur Ausführung der Erfindung und gewerbliche Verwertbarkeit:

Die erfindungsgemäße Asphaltzusammensetzung umfasst neben Asphalt oder einem Asphaltgemisch ein über Mikrowellenstrahlung erhitzbares siliciumcarbidhaltiges Bindemittel, wobei das Siliciumcarbid in dem Bindemittel in Partikelform vorliegt, wobei der Äquivalenzdurchmesser der in dem Bindemittel enthaltenen Siliciumcarbidpartikel kleiner 60 µm ist.

Vorzugsweise handelt es sich bei dem siliciumcarbidhaltigen Bindemittel um Bitumen. Ferner können auch anorganische Verbindungen wie mineralische und/oder keramische wärmeleitende Füllstoffe in dem Bindemittel eingesetzt werden. Daneben sind auch organische oder synthetische Bindemittel umfasst, wie zum Beispiel Proteine (z.B. Casein oder Glutin), Kohlenhydrate (z.B. Stärke oder Cellulose), Harze (z.B. Epoxidharze oder Aminoharze), Naturstoffe/Naturharze (z.B. Tannine oder Lignin). Alternativ oder zusätzlich können auch Kunststoffe wie Duroplaste (z.B. Melamin, Formaldehyd-Leim, Harnstoff-Formaldehyd-Leim), Thermoplaste (z.B. Kunststoffpulver oder Kunststoffdispersionen aus PVC, PP, Acrylate oder Polyvinylacetat (PVAc)) oder Leim, Schmelzkleber oder Silikone in der Zusammensetzung enthalten sein. Mögliche Lösemittel für das Bindemittel sind beispielsweise diverse Kohlenwasserstoffverbindungen, Öle, Fette oder Wasser. Ferner können chemische Vernetzter wie Monomere oder Bitumen-Aktivierer zum Einsatz kommen. Ebenfalls können Wärme-übertragende Stoffe dem Bindemittel zugemischt werden, insbesondere Wärmeleitöle oder Wärmeleitpasten. Zusätzlich können in dem Bindemittel auch Mikrowellen -reflektierende Stoffe vorhanden sein, beispielsweise Metalle, Metalloxide oder Graphit in Form von Flitter, Pulver, Fasern oder Gewebe. Umfasst sind auch Gemische der oben genannten Stoffe. Die Beimengung kann in flüssiger, pastöser, dispergierter oder in fester Form erfolgen. Vorzugsweise umfasst die erfindungsgemäße Zusammensetzung Bitumen als siliciumcarbidhaltiges Bindemittel und/oder einen oder mehrere Stoffe ausgewählt aus der Gruppe bestehend aus Mineralölderivaten, Ölen, Fetten, Teeren, Naturstoffen, Naturharzen, Kohlenhydraten, Proteinen, natürlichen Klebstoffen, Klebstoffen, Schmelzklebern, Holzleimen, Tanninen, Ligninen, Silikonen, Kunstharzen, Epoxiden, Kunststoffen, Duroplasten, Thermoplasten, Monomeren, sowie flüssigen siliciumcarbidhaltigen Eintraghilfen, Wasser, Alkoholen zur Verteilung des Siliciumcarbids im Asphaltgemisch.

In einer vorteilhaften Ausgestaltung liegen die Siliciumcarbidpartikel in dem Bindemittel dispergiert vor. Vorzugsweise sind die Siliciumcarbidpartikel hierzu bereits mit einem Bindemittel zumindest teilweise beschichtet, womit eine Erhöhung der Dispergierfähigkeit erreicht wird. Ferner wird durch die Beschichtung die Wärmeübertragung ausgehend von den Siliciumcarbidpartikeln auf das in der Mischung enthaltene Bindemittel erheblich verbessert.

Bevorzugt sind ein Massenanteil von bis zu 30 Gew.-% der Siliciumcarbidpartikel, bezogen auf die Asphaltzusammensetzung, in dem Bindemittel dispergiert, vorzugsweise bis zu 10 Gew.-%, vorzugsweise bis zu 5 Gew.-%, bevorzugt bis zu 2 Gew.-%. Besonders bevorzugt liegt der Massenanteil der Siliciumcarbidpartikel, bezogen auf die
Asphaltzusammensetzung, in dem Bindemittel zwischen 0,5 Gew.-% bis 30 Gew.-%, bevorzugt zwischen 5 Gew.-% bis 20 Gew.-%. Je nach Art und Aufbau der Asphaltzusammensetzung sind auch Konzentrationen der Siliciumcarbidpartikel, bezogen auf die Asphaltzusammensetzung, von weniger als 0,5 Gew.-% möglich.

In einer weiteren Ausführung sind innerhalb des Bindemittels nur Siliciumcarbidpartikel dispergiert, welche einen Äquivalenzdurchmesser von weniger als 60 µm, nach Bedarf auch weniger als 50 µm, 40 µm, 30 µm, 20 µm, 10 µm, 5 µm, 0,1 µm, 0,01 µm oder 0,001 µm besitzen. Bevorzugte Äquivalenzdurchmesser liegen in einem Bereich zwischen 25 nm und 60 µm. Besonders bevorzugt sind Bindemittelmischungen, welche Siliciumcarbidpartikel mit einem Äquivalenzdurchmesser zwischen 25 nm und 1 µm, 50 nm und 0,5 µm, 3 µm und 25 µm, oder zwischen 1 µm und 20 µm, oder zwischen 20 µm und 30 µm, oder zwischen 30 µm und 40 µm, oder zwischen 40 µm und 50 µm, oder zwischen 50 µm und 60 µm umfassen. Je feiner die Korngrößenverteilung der Siliciumcarbidpartikel, desto effektiver ist die Energieübertragung.

Insbesondere werden Bindemittel mit Siliciumcarbidpartikeln bevorzugt, bei denen die Partikelgrößenverteilung homogen ist. Damit ist gemeint, dass ein mittlerer Äquivalenzdurchmesser von 25 nm, 50 nm, 100 nm, 500 nm, 1 µm, 5 µm, 10 µm, 15 µm, 20 µm, 25 µm, 30 µm, 35 µm, 40 µm, 45 µm, 50 µm, 55 µm oder 60 µm nur jeweils um ± 10 %, vorzugsweise nur um ± 5 % abweicht.

In einer bevorzugten Variante liegt das Siliciumcarbid in Pulverform vor, wobei die Partikelgröße der darin enthaltenen Siliciumcarbidpartikel < 60 µm beträgt. Bei dieser Variante ist ein Einstreuen des Siliciumcarbids direkt in das Asphaltgemisch möglich. Alternativ kann das Siliciumcarbid auf die abgefräste, jedoch noch nicht beschichtete Deckschicht aufgetragen werden. So dient sie als Wärmeüberträger in die Verbindungsschicht bei der Erstellung einer neuen Straßendecke.

Die erfindungsgemäße feine Partikelverteilung und die kleinen Korngrößen der in der Mischung eingesetzten Silliciumcarbidpartikel haben den Vorteil, dass eine optimierte Wärmeübertragung bei der Behandlung des Asphaltgemisches mit Mikrowellen erfolgt, was bedingt ist durch die wesentlich verkleinerten Hohlräume zwischen den Gesteinskörnungen und/oder den Siliciumcarbidpartikeln. Die einzelnen Siliciumcarbidpartikel lagern sich unmittelbar zwischen die Gesteinskörnungen ein. Hierbei kann eine schnelle und effiziente Energieübertragung direkt auf das Bindemittel erfolgen, was energetisch günstiger ist, als eine Erhitzung der Gesteinskörnungen. Die von den Siliciumcarbidpartikeln absorbierte Energie wird somit nahezu vollständig an die Umgebung weitergeben, was bei Erreichen der Schmelztemperatur, der Erweichungstemperatur oder der Sintertemperatur zu einem Aufschmelzen oder einer plastischen Verarbeitbarkeit des Asphaltbindemittels führt.

Eine bevorzugte Asphaltzusammensetzung kann neben einen Asphaltbinder, einen Asphaltbeton, einen Splitmastixasphalt, einen Gussasphalt, einen Asphaltmastix, einen Tragdeckschichtenasphalt oder einen offenporigen Asphalt und auch mechanisch entfernte Anteile einer Asphaltdeckschicht umfassen. Die erfindungsgemäße Asphaltzusammensetzung eignet sich besonders für die Herstellung von asphalthaltigen Straßenbelägen oder deren Erneuerung.

Die Erfindung betriff ferner ein Verfahren zur Herstellung und/oder Erneuerung von wenigstens einer eine Asphaltdeckschicht umfassenden Asphaltdecke oder Fahrbahnbelägen. Bei dem erfindungsgemäßen Verfahren kommt ein Asphalt oder ein Asphaltgemisch mit einem viskosen siliciumcarbidhaltigen Bindemittel zum Einsatz und wird mit dem Asphalt bzw. Asphaltgemisch in Kontakt gebracht und anschließend mit Mikrowellen behandelt. Durch die Behandlung mit Mikrowellen wird unmittelbar auf das Bindemittel ein Energieeintrag mit Hitzeentwicklung über die Siliciumcarbidpartikel eingebracht. Das In-Kontakt-Bringen des Bindemittels mit dem Asphalt bzw. Asphaltgemisch oder einer Asphaltoberfläche kann mittel Aufgießen und/oder Aufspritzten und/oder Aufsprühen, erfolgen.

In einer ersten Ausführungsvariante wird zur Herstellung oder zur Wiederherstellung einer Asphaltdeckschicht erfindungsgemäß aus mechanisch entfernten Anteilen einer Asphaltdeckschicht ein Granulat erzeugt. Das Abtragen kann beispielsweise über ein Abfräsen einer Asphaltoberfläche erfolgen. In einem darauffolgenden Schritt wird das gewonnene Granulat bis zu einer Korngröße mit einem Äquivalenzdurchmesser zwischen > 0 mm und 60 mm, vorzugsweise zwischen 0,01 mm und 60 mm, vorzugsweise zwischen 0,01 mm und 25 mm, bevorzugt zwischen 0,05 mm und 5 mm zerkleinert, wobei die Korngröße von der jeweiligen Asphaltzusammensetzung abhängt. Bevorzugt sind beispielsweise Korngrößen zwischen 1 mm und 35 mm. Dabei wird eine homogene Korngrößenverteilung des Granulats angestrebt. Das somit erzeugte Granulat wird vorteilhafterweise mit einem viskosen siliciumcarbidhaltigen Bindemittel vermengt oder besprüht, das die oben beschriebene erfindungsgemäße Zusammensetzung aufweist.

Anschließend wird das mit siliciumcarbidhaltigem Bindemittel vermengte Granulat verdichtet und mit Mikrowellen behandelt. Gegebenenfalls kann zusätzlich Fremdenergie, beispielsweise über einen Gasbrenner eingebracht werden. Durch das Einbringen von Mikrowellen in das aufgetragene Granulat und der damit einhergehenden Erwärmung des Granulats kann bereits während des Aufbringens eine weitere Verdichtung des Materials erzielt werden. Die Behandlung mit Mikrowellen kann entweder nach dem Auftragen der Asphaltmischung auf eine Oberfläche und anschließender Verdichtung erfolgen oder bei der Auftragung. Vorzugsweise kommen bei der Anwendung Mikrowellen mit einer Frequenz zwischen 300 MHz und 300 GHz zum Einsatz. Vorzugsweise kommen Mikrowellen in einem Frequenzbereich zwischen 0,5 bis 25 GHz, vorzugsweise zwischen 0,5 und 10 GHz zur Anwendung.

Dieses Verfahren erhält eine ganz besondere Bedeutung bei der Reparatur von Asphaltdeckschichten mit wenigstens einem darin ausgebildeten Ausbruch (Schlagloch). Hierfür wird zunächst eine erfindungsgemäße viskose siliciumcarbidhaltige Asphaltzusammensetzung in den Ausbruch eingebracht. Anschließend erfolgt eine Verdichtung der Asphaltzusammensetzung innerhalb des Ausbruchs und das Einbringen von Mikrowellen in den Ausbruch.

Besonders vorteilhaft ist es, wenn die Oberfläche des Ausbruchs vor dem Einbringen der viskosen siliciumcarbidhaltigen Asphaltzusammensetzung mit dem viskosen siliciumcarbidhaltigen Bindemittel benetzt wird. Das Bindemittel kann hierzu Siliciumcarbidpartikel in einer anderen Korngrößenverteilung enthalten, als die Siliciumcarbidpartikel in der Asphaltzusammensetzung. Vorzugsweise enthält das Bindemittel Siliciumcarbidpartikel mit einem Äquivalenzdurchmesser in einem Bereich zwischen 1 nm und 60 µm, bevorzugt zwischen 25 nm und 20 µm. bevorzugt zwischen 50 nm und 10 µm.

In einem Anwendungsbeispiel wird das erfindungsgemäße Verfahren zur Herstellung und/oder Erneuerung von Asphaltdecken oder Fahrbahnbelägen, umfassend eine Deckschicht, eine Asphaltbindeschicht und eine Tragschicht eingesetzt.

Üblicherweise umfasst eine Fahrbahn eine Tragschicht, eine Deckschicht und eine dazwischen liegende Asphaltbinderschicht. Die Asphaltbinderschicht ist dabei unterhalb der Deckschicht und oberhalb der Tragschicht angeordnet. Die Asphaltbinderschicht, die Deckschicht und die Tragschicht sind jeweils stoffschlüssig miteinander verbunden. Die Deckschicht und/oder Asphaltbinderschicht kann auch asphalt- und/oder beton- und/oder zementhaltige Bestandteile beinhalten.

Zur Durchführung des Verfahrens wird zuerst wenigstens ein Teil der Deckschicht mechanisch entfernt, wobei ein Granulat aus der entfernten Deckschicht gewonnen wird. Das hierdurch gewonnene Granulat wird anschließend derart zerkleinert, bis die gewünschte durchschnittliche Korngröße mit einem Äquivalenzdurchmesser bis zu 60 mm vorliegt. Der abgetragenen Deckschicht können auch mineralische und/oder synthetische Polymere mit einem Gewichtsanteil von bis zu 40 Gew.-%, bevorzugt von 0,5 Gew.-% bis 40 Gew.-%, insbesondere zwischen 5 Gew.-% und 30 Gew.-%, insbesondere zwischen 10 Gew.-% und 20 Gew.-%, insbesondere zwischen 12,5 Gew.-% und 17,5 Gew.-%, zugegeben werden. Ebenso kann das Asphaltgemisch auch beton- oder zementhaltiges Granulat umfassen. Auf eine zu beschichtende Oberfläche kann nun das erzeugte Granulat, welches zuvor mit dem siliciumcarbidhaltigen Bindemittel vermischt oder vermengt und/oder besprüht wurde, aufgebracht werden.

Besonders vorteilhaft ist es, wenn die zu beschichtende Oberfläche vorab mit dem siliciumcarbidhaltigen Bindemittel benetzt wird. Dadurch wird eine verbesserte Haftung des erzeugten Granulats herbeigeführt. Anschließend wird das aufgetragene Granulat mit Mikrowellen behandelt und verdichtet. Hierdurch wird ein auf die Partikelumgebung wirkender Energieeintrag mit Wärmeentwicklung in dem Bindemittel bewirkt, wodurch die Viskosität der Asphaltzusammensetzung herabgesetzt wird. Zusätzlich wird die Verdichtungsfähigkeit der Asphaltzusammensetzung erhöht.

## Patentansprüche

1. Asphaltzusammensetzung, umfassend
- Asphalt oder ein Asphaltgemisch,
- ein über Mikrowellen erhitzbares siliciumcarbidhaltiges Bindemittel,
**dadurch gekennzeichnet, dass** das Siliciumcarbid in dem Bindemittel in Partikelform vorliegt, wobei der Äquivalenzdurchmesser der in dem Bindemittel enthaltenen Siliciumcarbidpartikel kleiner 60 µm beträgt.

2. Asphaltzusammensetzung nach Anspruch 1, **dadurch gekennzeichnet, dass** es sich bei dem siliciumcarbidhaltigen Bindemittel um Bitumen und/oder einen oder mehrere Stoffe ausgewählt aus der Gruppe, bestehend aus Mineralölderivaten, Ölen, Fetten, Teeren, Naturstoffen, Naturharzen, Kohlenhydraten, Proteinen, natürlichen Klebstoffen, Klebstoffen, Schmelzklebern, Holzleimen, Tanninen, Ligninen, Silikonen, Kunstharzen, Epoxiden, Kunststoffen, Duroplasten, Thermoplasten, Monomeren, sowie flüssigen siliciumcarbidhaltigen Eintraghilfen, Wasser, Alkoholen zur Verteilung des Siliciumcarbids im Asphaltgemisch handelt.

3. Asphaltzusammensetzung nach Anspruch 1 oder 2, **dadurch gekennzeichnet, dass** die einzelnen Siliciumcarbidpartikel in dem Bindemittel dispergiert vorliegen.

4. Asphaltzusammensetzung nach Anspruch 1 oder 2, **dadurch gekennzeichnet, dass** die einzelnen Siliciumcarbidpartikel mit dem Bindemittel zumindest teilweise beschichtet sind.

5. Asphaltzusammensetzung nach einem der Ansprüche 1 bis 3, **dadurch gekennzeichnet, dass** die Siliciumcarbidpartikel in dem Bindemittel, bezogen auf die Asphaltzusammensetzung, in einem Masseanteil von bis zu 30 Gew.-% vorliegen.

6. Asphaltzusammensetzung nach einem der Ansprüche 1 bis 5, **dadurch gekennzeichnet, dass** die Siliciumcarbidpartikel ohne Bindemittel in Pulverform vorliegen, wobei der Äquivalenzdurchmesser der im dem Bindemittel enthaltenen Siliciumcarbidpartikel < 60 µm beträgt.

7. Verfahren zur Herstellung und/oder Erneuerung von wenigstens einer Asphaltdeckschicht umfassenden Asphaltdecken oder Fahrbahnbelägen, bei dem ein Asphalt oder Asphaltgemisch mit einem viskosen siliciumcarbidhaltigen Bindemittel gemäß einem der Ansprüche 1 bis 6 in Kontakt gebracht und anschließend mit Mikrowellen behandelt werden, wodurch ein unmittelbar auf das Bindemittel wirkender, über die Siliciumcarbidpartikel vermittelter Energieeintrag mit Hitzeentwicklung erfolgt.

8. Verfahren nach Anspruch 7, **dadurch gekennzeichnet, dass** zunächst ein siliciumcarbidhaltiges Bindemittel gemäß einem der Ansprüche 1 bis 6 auf eine zu behandelnde Asphaltoberfläche aufgetragen und anschließend mit Mikrowellen im Bereich von 300 MHz bis 300 GHz behandelt wird.

9. Verfahren nach Anspruch 7, **gekennzeichnet durch** folgende Verfahrensschritte:
a) mechanisches Entfernen der Asphaltdeckschicht zur Erzeugung eines Granulats aus den entfernten Anteilen der Asphaltdeckschicht,
b) Zerkleinern des in Schritt (a) gewonnenen Granulats bis zur einer Korngröße mit einem Äquivalenzdurchmesser zwischen > 0 mm und 60 mm,
c) Vermengen eines viskosen siliciumcarbidhaltigen Bindemittels gemäß einem der Ansprüche 1 bis 6 mit dem in Schritt (b) zerkleinerten Granulat,
d) Verdichten des in Schritt (c) erhaltenen Materials, und
e) Einbringen von Mikrowellen in das verdichtete Material.

10. Verfahren nach Anspruch 7, **dadurch gekennzeichnet, dass** die Asphaltdeckschicht wenigstens einen darin ausgebildeten Ausbruch aufweist, **gekennzeichnet durch** folgende Verfahrensschritte:
a) Einbringen einer viskosen siliciumcarbidhaltigen Asphaltzusammensetzung gemäß einem der Ansprüche 1 bis 5 in den Ausbruch,
b) Verdichten der Asphaltzusammensetzung innerhalb des Ausbruchs,
c) Einbringen von Mikrowellen in den Ausbruch.

11. Verfahren nach Anspruch 10, **dadurch gekennzeichnet, dass** der Ausbruch vor dem Einbringen der viskosen siliciumcarbidhaltigen Asphaltzusammensetzung mit dem viskosen siliciumcarbidhaltigen Bindemittel gemäß einem der Ansprüche 1 bis 6 benetzt wird.

12. Verfahren nach einem der vorhergehenden Ansprüche, **dadurch gekennzeichnet, dass** das Siliciumcarbid mit oder ohne Bindemittelzusatz in Pulverform vorliegt und direkt in das Asphaltgemisch eingestreut wird.

13. Verfahren nach einem der vorhergehenden Ansprüche, **dadurch gekennzeichnet, dass** das Siliciumcarbid mit oder ohne Bindemittelzusatz auf die abgefräste, jedoch noch nicht beschichtete Deckschicht aufgetragen wird.

## Claims

1. Asphalt composition, comprising
- asphalt or an asphalt mixture,
- a binder containing silicon carbide which can be heated via microwaves,
**characterised in that** the silicon carbide is present in particle form in the binder, wherein the equivalence diameter of the silicon carbide particles contained in the binder is less than 60 µm.

2. Asphalt composition according to claim 1, **characterised in that** the binder containing silicon carbide is bitumen and/or one or more substances selected from the group comprising mineral oil derivatives, oils, fats, tars, natural substances, natural resins, carbohydrates, proteins, natural adhesives, adhesives, melt adhesives, wood glues, tannins, lignins, silicones, synthetic resins, epoxides, plastics, duroplastics, thermoplastics, monomers, and liquid application aids containing silicon carbide, water, alcohols for distribution of silicon carbide in the asphalt mixture.

3. Asphalt composition according to claim 1 or 2, **characterised in that** the individual silicon carbide particles are present in dispersed form in the binder.

4. Asphalt composition according to claim 1 or 2, **characterised in that** the individual silicon carbide particles are at least partially coated with the binder.

5. Asphalt composition according to any of claims 1 to 3, **characterised in that** the silicon carbide particles in the binder are present in a mass proportion of up to 30% by weight in relation to the asphalt composition.

6. Asphalt composition according to any of claims 1 to 5, **characterised in that** the silicon carbide particles without binder are present in powder form, wherein the equivalence diameter of the silicon carbide particles contained in the binder is < 60 µm.

7. Method for production and/or renovation of at least one asphalt covering or road surface comprising an asphalt cover layer, wherein the asphalt or asphalt mixture is brought into contact with a viscous binder containing silicon carbide according to any of claims 1 to 6 and then treated with microwaves, whereby energy is delivered with heat development by means of the silicon carbide particles and acts directly on the binder.

8. Method according to claim 7, **characterised in that** firstly a binder containing silicon carbide according to any of claims 1 to 6 is applied to an asphalt surface to be treated, and then treated with microwaves in the range from 300 MHz to 300 GHz.

9. Method according to claim 7, **characterised by** the following method steps:
a) mechanical removal of the asphalt cover layer to create a granulate from the removed parts of the asphalt cover layer,
b) comminution of the granulate obtained in step (a) to a grain size with an equivalence diameter of between > 0 mm and 60 mm,
c) mixing of a viscous binder containing silicon carbide according to any of claims 1 to 6 with the granulate comminuted in step (b),
d) compaction of the material obtained in step (c), and
e) application of microwaves to the compacted material.

10. Method according to claim 7, **characterised in that** the asphalt cover layer has at least one eruption formed therein, **characterised by** the following method steps:
a) application to the eruption of a viscous asphalt composition containing silicon carbide according to any of claims 1 to 5,
b) compaction of the asphalt composition inside the eruption,
c) application of microwaves to the eruption.

11. Method according to claim 10, **characterised in that** before the application of the viscous asphalt composition containing silicon carbide, the eruption is wetted with the viscous binder containing silicon carbide according to any of claims 1 to 6.

12. Method according to any of the preceding claims, **characterised in that** the silicon carbide, with or without the addition of binder, is present in powder form and scattered directly into the asphalt mixture.

13. Method according to any of the preceding claims, **characterised in that** the silicon carbide, with or without the addition of binder, is applied to the cover layer which has been scraped but not yet coated.

## Revendications

1. Composition d'asphalte incluant
- de l'asphalte ou un mélange d'asphalte,
- un liant renfermant du carbure de silicium et pouvant être chauffé sous l'action de micro-ondes,
**caractérisée par le fait que** le carbure de silicium se présente sous forme particulaire, dans le liant, le diamètre équivalent des particules de carbure de silicium, contenues dans le liant, étant inférieur à 60 µm.

2. Composition d'asphalte selon la revendication 1, **caractérisée par le fait que** le liant, renfermant du carbure de silicium, est constitué d'un bitume et/ou d'une ou plusieurs substance(s) sélectionnée(s) au sein du groupe comprenant des dérivés d'huiles minérales, des huiles, des graisses, des goudrons, des substances naturelles, des résines naturelles, des hydrocarbures, des protéines, des adhésifs naturels, des substances adhésives, des adhésifs thermofusibles, des colles à bois, des tanins, des lignines, des silicones, des résines synthétiques, des époxydes, des matières plastiques, des matières thermodurcissables, des matières thermoplastiques, des monomères, ainsi que des auxiliaires liquides d'incorporation renfermant du carbure de silicium, de l'eau, des alcools, en vue de la répartition du carbure de silicium dans le mélange d'asphalte.

3. Composition d'asphalte selon la revendication 1 ou 2, **caractérisée par le fait que** les particules individuelles de carbure de silicium se présentent sous forme dispersée dans le liant.

4. Composition d'asphalte selon la revendication 1 ou 2, **caractérisée par le fait que** les particules individuelles de carbure de silicium sont au moins partiellement revêtues par le liant.

5. Composition d'asphalte selon l'une des revendications 1 à 3, **caractérisée par le fait que** les particules de carbure de silicium sont présentes, dans le liant, en un pourcentage massique atteignant jusqu'à 30 % en poids rapporté à ladite composition d'asphalte.

6. Composition d'asphalte selon l'une des revendications 1 à 5, **caractérisée par le fait que** les particules de carbure de silicium exemptes de liant se présentent sous forme pulvérulente, le diamètre équivalent des particules de carbure de silicium, contenues dans le liant, étant < 60 µm.

7. Procédé de production et/ou de rénovation de tapis asphaltés ou de revêtements de chaussées comportant au moins une couche de recouvrement en asphalte, dans lequel un asphalte ou un mélange d'asphalte est mis en contact avec un liant visqueux renfermant du carbure de silicium, conforme à l'une des revendications 1 à 6, et est ensuite traité à l'aide de micro-ondes, ce qui gouverne un apport d'énergie avec génération de chaleur, agissant directement sur le liant et conféré par les particules de carbure de silicium.

8. Procédé selon la revendication 7, **caractérisé par le fait qu'**un liant renfermant du carbure de silicium, conforme à l'une des revendications 1 à 6, est tout d'abord déposé sur une surface d'asphalte à traiter et est traité, dans l'enchaînement, à l'aide de micro-ondes situées dans la plage de 300 MHz à 300 GHz.

9. Procédé selon la revendication 7, **caractérisé par** les étapes opératoires suivantes :
a) élimination mécanique de la couche d'asphalte, en vue de produire un granulat à partir des fractions éliminées de ladite couche d'asphalte,
b) broyage du granulat obtenu à l'étape (a), jusqu'à une grosseur de grains présentant un diamètre équivalent compris entre > 0 mm et 60 mm,
c) mélange d'un liant visqueux renfermant du carbure de silicium, conforme à l'une des revendications 1 à 6, avec le granulat broyé à l'étape (b),
d) compactage du matériau obtenu à l'étape (c), et
e) introduction de micro-ondes dans le matériau compacté.

10. Procédé selon la revendication 7, **caractérisé par le fait que** la couche de recouvrement en asphalte accuse au moins une fracturation intrinsèque, **caractérisé par** les étapes opératoires suivantes :
a) déversement, dans la fracturation, d'une composition d'asphalte visqueuse conforme à l'une des revendications 1 à 5, renfermant du carbure de silicium,
b) compactage de ladite composition d'asphalte, à l'intérieur de ladite fracturation,
c) introduction de micro-ondes dans ladite fracturation.

11. Procédé selon la revendication 10, **caractérisé par le fait que**, préalablement au déversement de la composition d'asphalte visqueuse renfermant du carbure de silicium, la fracturation est imprégnée à l'aide du liant visqueux renfermant du carbure de silicium, conforme à l'une des revendications 1 à 6.

12. Procédé selon l'une des revendications précédentes, **caractérisé par le fait que** le carbure de silicium se présente sous forme pulvérulente, avec ou sans adjuvant de liant, et est directement dispersé dans le mélange d'asphalte.

13. Procédé selon l'une des revendications précédentes, **caractérisé par le fait que** le carbure de silicium est déposé, avec ou sans adjuvant de liant, sur la couche de recouvrement fraisée, mais toutefois non encore revêtue.
